# EUROPEAN PATENT SPECIFICATION

(11) **EP 3 037 705 B1**
(45) Date of publication and mention of the grant of the patent: **26.07.2017**
(21) Application number: 15201784.4
(22) Date of filing: 21.12.2015
(51) Int. Cl.: F16K 37/00

(54) **DEVICE FOR ELECTRICAL AND VISUAL DETECTION OF THE POSITION OF A SHAFT**
VORRICHTUNG ZUR ELEKTRISCHEN UND VISUELLEN ERKENNUNG DER STELLUNG EINER SPINDEL
DISPOSITIF DE LA DETECTION ELECTRIQUE ET VISUELLE& xA;DE LA POSITION D'UN ARBRE

(30) Priority: 22.12.2014 IT PR20140089
(43) Date of publication of application: 29.06.2016
(73) Proprietor: DVG Automation S.P.A., 29016 Cortemaggiore (Piacenza) (IT)
(72) Inventor: MASINI, Emanuele, 29016 Cortemaggiore (PC) (IT)
(74) Representative: Guareschi, Antonella

(56) References cited:
- WO-A1-2014/083157
- DE-A1- 10 235 353
- US-B1- 6 820 647

## Description

### FIELD OF APPLICATION OF THE INVENTION

The present finding is inserted in the field of actuators for the remote actuation and regulation of fluid flow control valves, in tubes and pipes (see for instance DE-A-102 35 353). The actuator is the member that generates the movement and allows the variation of the desired physical size.

Currently, said actuators comprise, coupled therewith, electrical detection devices adapted to detect the positioning of the shaft of the actuator or control valve, so as to have a clear remote control and verification. Indeed, the electrical signal is subsequently decoded into an angular positioning.

There is also the need to maintain a direct visual control of the positioning of the aforesaid shaft, so as to allow the possibility of a direct verification by the assigned personnel.

Therefore, the object of the present finding is to provide the art with a valve actuator with device for the electrical and visual detection of the positioning of the shaft of the actuator, with driving of the visual indicator through a magnetic coupling.

The advantages of the present finding regard the fact that any perforation of the cover of the detection device is thus avoided - such perforation made in order to make the stem pass through for the direct mechanical driving. Very advantageously, also by means of the application of sealing rings, the entrance of water is nearly entirely prevented.

Said objects and advantages are all attained by the device for the electrical and visual detection of the position of shafts of actuators with airtight seal; the actuator comprises said device, object of the present finding, which is characterized with regard to that provided in the below-reported claims.

### BRIEF DESCRIPTION OF THE FIGURES

This and other characteristics will be clearer from the following description of several embodiments illustrated, merely by way of a non-limiting example, in the enclosed drawing tables.
- Figure 1: illustrates perspective views of the components of the device for the electrical and visual detection of the position of shafts of actuators, object of the present finding, in "exploded" mounting configuration, according to the common axis AA,
- Figures 2 and 3: also illustrate the device in exploded configuration and a median section thereof,
- Figure 4: illustrates the device in assembled configuration, where its axial stem exits from the bottom of the body before being integrally connected with the shaft of valve actuators and allowing the detection of the positioning thereof,
- Figure 5: illustrates the section of the device of figure 4

### DESCRIPTION OF THE FINDING

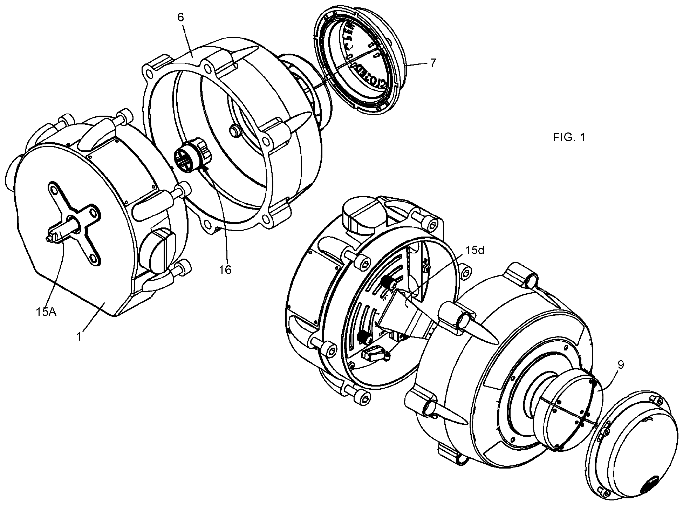

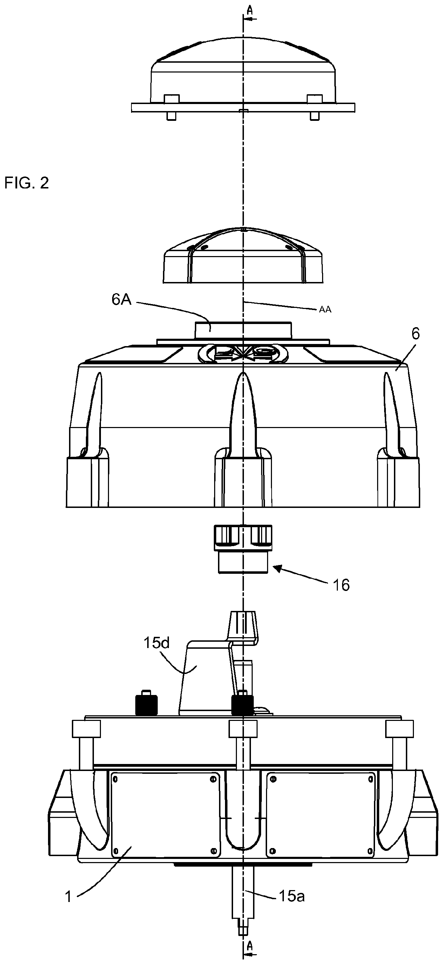

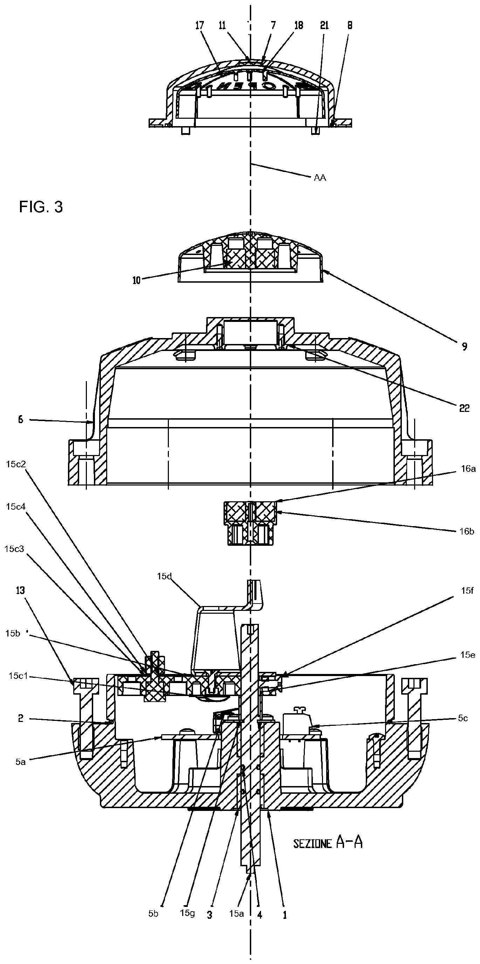

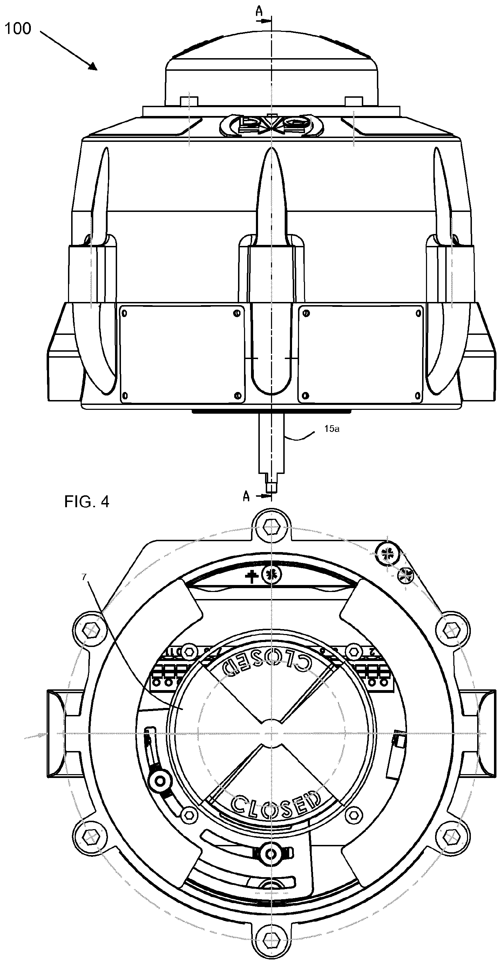

With particular reference to figures 1, 2, 3, 4 and 5, reference number 100 overall indicates an electrical and visual device for detecting the angular position of the shaft of an actuator.

If the shaft for example drives an element for the fluid interception in pipes, with the present device it is allowed to control the level of opening or closing of such pipes.

The shaft of the actuator, not illustrated, can be coupled to a stem 15A of the device 100 so as to integrally rotate therewith and allow acquiring an electrical signal of the rotation of the shaft actuator.

The invention also provides for the possibility to have visual indication.

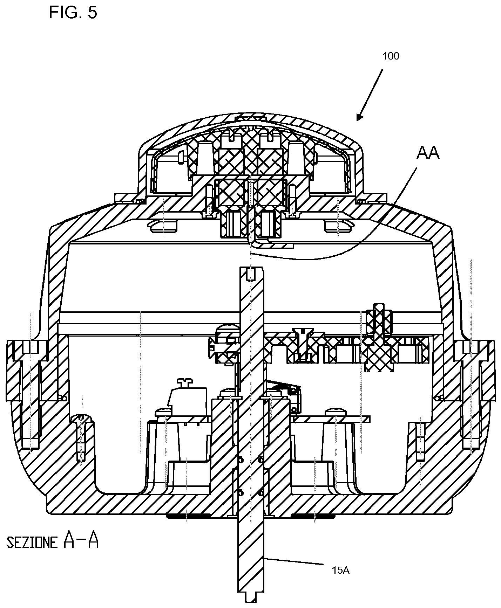

Indeed, if with AA the axis is identified of the stem 15A of the device 100, exiting from a lower base body 1, it is observed (e.g. in figure 5) that said device 100 comprises a visual indicator (formed by the components 7, 9, 17, 18) of the position of the stem; said visual indicator is coaxial and free to rotate according to said axis AA, abutting against a portion 6A in relief of the closure cover.

The driving, i.e. the actuation in rotation, of the visual indicator (7, 9, 17, 18) occurs following a magnetic coupling and then the rotation of the stem 15a of the device 100 itself.

There is thus the following advantage: while the electrical components 15a, 15b, 15c, 15d, 15e, 15f, 15g, 15h, adapted to acquire the angular position of the stem, are contained in the closed shell formed by the lower body 1 and closure cover 6, the mechanical components for the actuation/driving of the indicator are all situated outside the shell of the device, and this system for driving the indicator avoids perforations of the cover in order to make the stem pass through for the direct driving of the indicator. In this manner, the entrance of water is nearly entirely prevented.

The closure cover 6 is screwed on the body 1, preferably with fixing systems such as screws, and preferably with the interposition of sealing rings, O-rings, to ensure the airtight seal. Sealing rings are also placed in the passage hole of the axial stem that exits from the device itself.

With regard to the system for making the magnetic coupling, the figures show that this is attained by:
- a first series of magnets 16a arranged in contact with the internal side of the cover 6 and housing in a rotation pin 16b coaxial with the stem; the pin 16b in turn is in mechanical connection with the stem 15a,
- a second series of magnets 10 mutually positioned with respect to the first series of magnets 16a; in addition, said second series of magnets 10 are on the external side of the cover 6 (i.e. above with reference to the device of figure 5); in addition, the second series of magnets 10 is in mechanical connection with the visual indicator.

Each of the two series of magnets 10, 16a is constituted by at least four magnets with offset polarities, both with respect to those on the same side and those on the opposite sides of the cover.

With regard to said second series of magnets 10, these are in mechanical connection with the visual indicator through an indicator-disc 9 intermediary.

The indicator-disc 9 on the lower part contains the magnets 10, which in such a manner abut against a corresponding concentric annular portion 6A which is extended from the cover and along the axis AA of the detection device. On the opposite side, the pin 16b of the first series of magnets 16a is situated, such that a rotation of the latter, following the rotation of the stem 15a, induces a rotation of the second series and hence a rotation of the indicator-disc 9 (which as stated is free to rotate on the cover 6) and hence of the visual indicator.

The visual indicator 9 is protected by a further mask-cover 7, so as to only be partially transparent and show one of the portions of the indicator corresponding to the positioning of the stem and hence of the shaft of the actuator.

According to the embodiment illustrated herein, but only by way of example, the pin 16b of the first series of magnets 16a is placed in communication and hence in rotation with the rotation of the stem by means of a driving plate 15d. The driving plate 15d is bent so as to be inserted, at one end inside the first magnets pin 16b, at the other end integral with a cam 15b, the latter also operating in order to support several components for the electrical acquisition.

The end that is fit in the magnet pin is arranged along the axis AA of the device 100, such axis coinciding with that of the stem 15a.

### OPERATION

The stem 15a of the device 100 can be coupled on the shaft of the actuator; also the device itself will be made integral with such actuator.

The stem 15a is turned by the actuator and this causes the rotation of the cam 15b, and:
- the generation of an electrical signal, by means of angular position acquisition's device,
- the simultaneous rotation of the driving plate 15d.

The stem 15a, by turning, turns the cam 15b which in turn turns the driving plate 15d; the latter turns the driving pin 16b for the first magnets 16a.

The rotation of the magnetic field induces an actuation of the second magnets 10 via magnetic coupling; the indicator-disc 9 rotates like the plastic elements that bear the visual references, of the type with OPEN, CLOSED writing or color references.

The darkening mask cover 7 only leaves visible an angular portion in which the position of the shaft of the actuator can be visually shown.

The protection is required both for the device 100 in itself, as illustrated in the figures, and for the fluid-interception member actuator which comprises said device integral therewith.

### INDEX OF THE REFERENCE NUMBERS

- 1: Body
- 2: O-R Ring
- 3: Bushing of the stem
- 4: O-R Ring
- 5: Micro-assembly
- 5A: Micro-printed circuit
- 5B: angular position acquisition's device
- 5C: Terminal
- 6: Machined cover
- 6A: Portion in relief
- 7: Indicator cover
- 8: O-R Ring
- 9: Position indicator holder disc
- 10: Magnet
- 11: Mask, darkener
- 12: Screws
- 13: Screws
- 14: Washer
- 15: Stem-cam assembly
- 15a: stem case
- 15b: Plastic cam
- 15c: Probe assembly
- 15c1: Pawl probe
- 15c2: Washer
- 15c3: Cup spring
- 15c4: Knurled pawl
- 15d: Driving plate
- 15e: Nut
- 15f: Screw
- 15g: Cam spacer
- 15h: Screw
- 16: Magnetic driving assembly
- 16a: Magnet
- 16b: Magnet containment pin
- 17: OPEN position indicator
- 18: CLOSED position indicator

## Claims

1. A device (100) for the electrical and visual detection of the positioning of at least one actuator drive shaft, the device comprising
a. a stem (15a) associable with said shaft,
b. a visual indicator of the position of the stem (15a)
whereby
c. rotation of the stem (15a) of the device induces a driving of an indicator disk (9) via a magnetic coupling,
d. the magnetic coupling is attained by:
i. a first series of magnets (16a) inserted in a rotation pin (16b) coaxial and in mechanical connection with the stem (15a); said first magnets (16a) being arranged coaxial with and inside a cover (6) of the device (100);
ii. a second series of magnets (10) mutually positioned with respect to the first series of magnets (16a), i.e. coaxial with and outside the cover (6);
e. each of said two series of magnets (10, 16a) is constituted by at least four magnets with offset polarities, both with respect to those on the same side and those on the opposite sides of the cover (6);
f. said second series of magnets (10) is in mechanical connection with the visual indicator through the indicator-disc (9) which contains said second series of magnets (10) on its lower part;
g. said second series of magnets (10) abuts against one side of a corresponding concentric annular portion (6A) extending from the cover (6) and along the axis (AA) of the device (100), while on the opposite side of the portion (6A), the rotation pin (16b) with the first series of magnets (16a) is situated;
and whereby
h. said rotation pin (16b) is mechanically connected to the stem (15a) by means of the intermediation of a driving plate (15d), inserted at one end in the rotation pin and at the other end in a cam (15b) in turn integral with the stem (15a); the cam (15b) also acting as element-holder for an electrical detection group.

2. Device (100) according to claim 1, **characterized in that** the indicator-disc (9) is free to rotate on the cover (6) along with plastic elements that bear visual references, said references of the type like "OPEN", "CLOSED" writing (17, 18) or color references.

3. Device (100) according to claim 1, **characterized in that** the visual indicator (19) is protected by a further mask-cover (7), so as to be only partially transparent and show one of the portions of the indicator corresponding to the positioning of the stem and hence of the shaft of the actuator.

4. Device (100) according to claim 1, **characterized in that** the electrical detection group is adapted to acquire the angular position of the stem (15a) and is contained within the closed shell formed by a lower body (1) and the closure cover (6).

5. Valve actuator **characterized in that** it comprises, associated with at least one fluid-interception member actuation shaft thereof, a device according to at least one of the preceding claims.

## Patentansprüche

1. Vorrichtung (100)) für die elektrische und optische Erfassung der Positionierung von zumindest einer Antriebswelle eines Aktuators, wobei die Vorrichtung folgendes aufweist:
a. einen Schaft (15a), der mit der genannten Welle verbunden ist ,
b. eine visuelle Anzeige der Position des Schaftes (15a)
wobei
c. eine Drehung des Schaftes (15a) der Vorrichtung einen Antrieb einer Anzeigescheibe (9) durch eine Magnetkupplung induziert,
d. die magnetische Kopplung wird erhalten durch:
i. einen ersten Satz von Magneten (16a) die in einem Drehbolzen (16b) eingeführt und koaxial und in mechanischer Verbindung mit dem Schaft (15a); wobei die genannten ersten Magnete (16a) koaxial und im Innern einer Abdeckung (6) der Vorrichtung (100) angeordnet sind;
ii. einen zweiten Satz von Magneten (10), die in Bezug auf den ersten Satz von Magneten (16a) gegenseitig, d.h. koaxial und außerhalb der Abdeckung (6), positioniert sind;
e. jeder der genannten zwei Sätze von Magneten (10, 16) durch mindestens vier Magneten mit gestaffelten Polarität gebildet ist, sowohl in Bezug auf der gleichen Seite als in Bezug auf den gegenüberliegenden Seiten der Abdeckung (6) ;
f. der genannte zweite Satz von Magneten (10) sich in mechanischer Verbindung mit der Sichtanzeige durch die Anzeigescheibe (9) befindet, die den genannten zweiten Satz von Magneten (10) an ihrem unteren Teil enthält;
g. der genannte zweite Satz von Magneten (10) auf eine Seite eines entsprechenden konzentrischen ringförmigen Teils (6A) stößt, das sich aus der Abdeckung (6) und entlang der Achse (AA) der Vorrichtung (100) erstreckt, während auf der gegenüberliegenden Seite des Teils (6A) der Drehbolzen (16b) mit dem ersten Satz von Magneten (16a) angeordnet ist;
und wobei
h. der genannte Drehzapfen (16b) mit dem Schaft (15a) durch die Zwischenschaltung einer Steuerplatte (15d) mechanisch verbunden ist, die an einem Ende in dem Drehzapfen und am anderen Ende in einem Nocken (15b) eingeführt ist, der wiederum integral mit Schaft (15a) ist; der Nocken (15b) wirkt auch als Stützelement für eine elektrische Nachweisgruppe.

2. Vorrichtung (100) nach Anspruch 1, **dadurch gekennzeichnet, dass** die Anzeigescheibe (9) frei ist auf der Abdeckung (6) zusammen mit Kunststoffteilen zu drehen, die Sichtreferenzen tragen, wobei die genannten Referenzen der Art von Beschriftungen wie "AUF" "ZU" oder von Farbreferenzen.

3. Vorrichtung (100) nach Anspruch 1, **dadurch gekennzeichnet, dass** der visuelle Indikator (19) durch eine zusätzliche Abdeckmaske (7) geschützt ist, so dass er nur teilweise durchlässig ist und eines der Teile des Indikators zeigt, das der Positionierung des Schaftes und damit des Schaftes des Aktuators entspricht.

4. Vorrichtung (100) nach Anspruch 1, **dadurch gekennzeichnet, dass** die elektrische Detektionseinheit derart angepasst ist, die Winkelposition des Schaftes (15a) zu erfassen und innerhalb der geschlossenen Schale enthalten ist, die und aus einem unterem Körper (1) und der Schlussabdeckung (6) gebildet ist.

5. Ventilaktuator, **dadurch gekennzeichnet dass** es in Verbindung mit mindestens einer einzelnen Antriebswelle zum Absperren eines Fluides, eine Vorrichtung nach zumindest einem der vorhergehenden Ansprüche, aufweist.

## Revendications

1. Dispositif (100) pour la détection électrique et visuelle de la position d'au moins un arbre d'entraînement d'un actionneur, le dispositif comprenant:
a. une tige (15a) associée audit arbre,
b. un indicateur visuel de la position de la tige (15a)
dans lequel
c. une rotation de la tige (15a) du dispositif induit un entraînement d'un disque indicateur (9) par un accouplement magnétique,
d.le couplage magnétique est obtenu par:
i. une première série d'aimants (16a) inséré dans un pivot de rotation (16b) coaxial et avec une liaison mécanique avec la tige (15a); lesdits premiers aimants (16a) étant disposés de manière coaxiale et à l'intérieur d'un couvercle (6) du dispositif (100);
ii. une deuxième série d'aimants (10) qui sont positionnées mutuellement par rapport à la première série d'aimants (16a), c'est-à-dire de manière coaxiale et à l'extérieur du couvercle (6) ;
e. chacune desdites deux séries d'aimants (10, 16) est constituée par au moins quatre aimants avec des polarités en quinconce, à la fois par rapport à ceux à celles situées du même côté et à celles situées sur les côtés opposés du couvercle (6);
f. ladite deuxième série d'aimants (10) est en liaison mécanique avec l'indicateur visuel à l'aide du disque indicateur (9) qui contient ladite deuxième série d'aimants (10) sur sa partie inférieure;
g. ladite deuxième série d'aimants (10) vient en butée contre un côté d'une partie annulaire concentrique correspondante (6A) développée du couvercle (6) et le long de l'axe (AA) du dispositif (100), tandis que sur le côté opposé de la partie (6A), est situé l'axe de rotation (16b) avec la première série d'aimants (16a);
et dans lequel
h. ledit pivot de rotation (16b) est relié mécaniquement à la tige (15a) par l'interposition d'une plaque de commande (15d), insérée à une extrémité dans le pivot rotatif et l'autre extrémité dans une came (15b) à son tour solidaire avec la tige (15a); la came (15b) agit également comme un élément de support pour un groupe de détection électrique.

2. Dispositif (100) selon la revendication 1, **caractérisé en ce que** le disque indicateur (9) est libre de tourner sur le couvercle (6) avec des éléments en matière plastique qui portent des références visuelles, lesdites références étant du type avec l'écriture "OUVERT", "FERME'" ou étant des références de couleur.

3. Dispositif (100) selon la revendication 1, **caractérisé en ce que** l'indicateur visuel (19) est protégé par un masque de recouvrement (7) supplémentaire, de manière à être partiellement transparent et montrant l'une des parties de l'indicateur correspondant au positionnement de la tige et donc de l'arbre de l'actionneur.

4. Dispositif (100) selon la revendication 1, **caractérisé en ce que** l'unité de détection électrique est adaptée pour acquérir la position angulaire de la tige (15a) et est contenue dans l'enveloppe fermée formée par un corps inférieur (1) et par le couvercle de fermeture (6).

5. Actionneur à soupape, **caractérisé en ce qu'**il comprend, associé à au moins un seul arbre d'entraînement d'un élément d'arrêt d'un fluide, un dispositif selon au moins l'une des revendications précédentes.
